# EUROPEAN PATENT APPLICATION

(11) **EP 1 424 559 A1**
(43) Date of publication of application: **02.06.2004**
(21) Application number: 02736206.0
(22) Date of filing: 01.07.2002
(51) Int. Cl.: G01N 37/00

(54) **MICRO FLOW PASSAGE DEVICE, CONNECTION DEVICE, AND METHOD OF USING THE DEVICES**

(30) Priority: 09.08.2001 JP 2001242420; 30.10.2001 JP 2001332688
(71) Applicant: Olympus Corporation, Tokyo 151-0072 (JP)
(72) Inventor: FUNAZAKI, Jun, Hino-shi, Tokyo 191-0065 (JP); SHINOHARA, Etsuo, Hachioji-shi, Tokyo 192-0906 (JP)
(74) Representative: von Hellfeld, Axel, Dr. Dipl.-Phys.
(86) International application number: PCT/JP2002/006645
(87) International publication number: WO 2003/016918

(57) **Abstract**

A substrate and an elastomer are bonded each other, and then, a ditch is formed at the bonded surface of the substrate or the elastomer to constitute a flow channel and thus, to constitute a minute flow channel device with the flow channel. Then, a through-hole functioning an inlet and/or outlet is formed at the elastomer so as to be communicated with the flow channel. Then, a convex or concave joint is formed at the elastomer with integration so as to be opened outward from the through-hole so that the inclination angle of said joint is set to not less than 45 degrees and less than 90 degrees. Then, a joining device is pressed and joined with the minute flow channel device via the joint. Therefore, the connection for injecting and discharging a substance such as fluid or gas can be easily realized and automatized, and the device exchange can be performed easily.

## Description

### FIELD OF THE INVENTION

This invention relates to a minute flow channel device with a minute flow channel, a joining device which is joined with the minute flow channel device for injecting and discharging a substance such as fluid or gas in and out of the minute flow channel of the minute flow channel device, and a method for using the minute flow channel device.

### DESCRIPTION OF THE PRIOR ART

For injecting and discharging a substance such as fluid or gas in and out of a minute flow channel of a minute flow channel device, it is required to join a joining device exclusively for injecting and discharging with the minute flow channel device.

Such a minute flow channel device and such a joining device as mentioned above are exemplified in "NOVEL INTERCONNECTION AND CHANNEL TECHNOLOGYIES FOR MICROFLUIDICS", N. J. Mourlas et al., Proceedings of the µTAS'98 Workshop (Document 1), where a plurality of openings are formed at a minute flow channel device to be functioned as inlets and outlets of a minute flow channel device which are communicated with the flow channels of the minute flow channel device, and minute pipes made of resin or metal are adhered to or pressed into the respective openings to inject and discharge fluids, etc., into and out of the respective flow channels via the respective openings and the respective pipes (first conventional example).

In addition, another minute flow channel device and another joining device are exemplified in Document 1, where a plurality of openings are formed at a minute flow channel device to be functioned as inlets and outlets of a minute flow channel device which are communicated with the flow channels of the minute flow channel device, and gasket layers made of SiC or the like are formed around the respective openings, and fitting couplers made of plastic material are inserted into different through-holes of the minute flow channel device from the inlets and the outlets thereof to be fixed at the forefronts of the fitting couplers through thermal adhesion so that the through-holes are matched with the inlets and the outlets, and minute pipes are pressed into the respective fitting couplers to inject and discharge fluids, etc., into and out of the respective flow channels via the respective fitting couplers and the respective pipes (second conventional example).

Moreover, this applicant proposed a minute flow channel device in Japanese Patent Application Laid-open No. 2001-136963, where some joints with tubes joined therewith made of elastomer such as rubber are employed, and the through-holes communicated with the tubes of the joints are formed convexly to be pressed against the inlets and the outlets communicated with the flow channels of the minute flow channel device and to inject and discharge fluids, etc., into and out of the respective flow channels via the respective tubes (third conventional example).

In the first conventional example, however, since the pipe pressing and the precise pipe adhesion are required, the reliability of sealing the joint between the pipes and the openings of the minute flow channel device are degraded and the productivity of minute flow channel device is also degraded so that the production cost of minute flow channel device is increased. In the exchange of minute flow channel device, since the pipes for joint and the external tubes are released and attached once again, it may take much times in exchanging the minute flow channel device into another one if it is required to join many flow channels to the pipes and the tubes. Moreover, it is difficult to automatize the tube pressing against the pipes.

In the second and the third conventional examples, the fitting couplers and the joints are employed to increase the number of parts to be utilized for joining the pipes with the minute flow channel device, so that it is required to assure the reliability of each parts and the fabrication of the minute flow channel device may becomes complicated. Therefore, the productivity of the minute flow channel device may be degraded and the production cost of the minute flow channel device may be increased, as the first conventional example. In the exchange of the minute flow channel device, the fitting couplers and the joints are joined with the respective openings once again to increase the exchange period of time, as the first conventional example.

### DISCLOSURE OF THE INVENTION

It is an object of the present invention, in view of the conventional problems, to provide a minute flow channel device and a joining device for the minute flow channel device, whereby the joining for injecting and discharging a substance such as fluid or gas can be automatized and performed easily to enhance the reliability and the productivity of the minute flow channel device; to decrease the production cost of the minute flow channel device and to simplify the exchanging process of the minute flow channel device, and to provide a method for using the minute flow channel device.

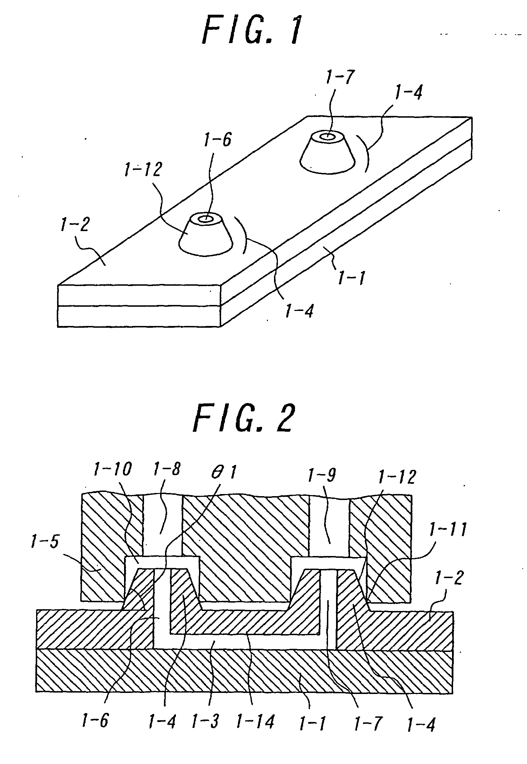

In view of the object of the present invention, this invention is characterized by the following items.
1. A minute flow channel device comprising a substrate and an elastomer bonded with said substrate, wherein a ditch is formed at either or both of bonded surfaces of the substrate and the elastomer to constitute a flow channel, and a through-hole, which functions as an inlet and/or an outlet of a substance and is communicated with the flow channel, is formed at the elastomer.
2. In the minute flow channel device as defined in item 1, a convex joint is formed at the elastomer with integration so as to be opened outward from the through-hole, and the inclination angle of an inclined side wall of the joint is set to not less than 45 degrees and less than 90 degrees.
3. In a joining device for injecting and discharging a substance into and out of a minute flow channel device as defined in item 2, a rigid member with an opening and a joint matching member are provided so as to surround the opening of said rigid member, and a joint of the minute flow channel device is pressed against the joint matching member so that an edge of an inner wall of the joint matching member are contacted with a periphery of an inclined side surface of the joint.
   According to the minute flow channel device and the joining device as mentioned above, the joining device is joined with the minute flow channel device through pressing the joint matching member against the convex joint. In this case, since the inclination angle (refer to θ1 in Fig. 2, for example) of the inclined side wall of the joint is set to not less than 45 degrees and less than 90 degrees so that the joint is spread downward, the joint matching member can be contacted with the periphery of the joint precisely and tightly through the elastic deformation of the edge of the inner wall of the joint matching member.
   Therefore, the connection for injecting the substance between the minute flow channel device and the joining device can be precisely realized. If the inclination angle of the inclined side wall of the joint is set within another angle range except the above-mentioned preferable angle range; the inclined side wall can not be contacted with the edge of the inner walls of the joint matching members sufficiently, so that the sealing performance of the substance may be deteriorated. The same function/effect can be exhibited as another joint functioning as a pipe is inserted into the opening of the joint.
   In this way, according to the minute flow channel device and the joining device of the present invention, an additional joining member such as a fitting coupler except the joining device is not required, and the attachment to another device of the additional joining member is not required. Moreover, minute pipes to be pressed into the inlet and the outlet are not required. In addition, the rigid member as the joining device can be joined easily with the minute flow channel device through pressing therebetween, so that the joining operation between the minute flow channel device and the joining device can be automatized with a given instrument. As a result, the joining operation and the joining structure can be simplified, so that the reliability of the joining operation can be developed and the joining cost can be lowered.
4. In the minute flow channel device as defined in item 1, a concave joint is formed at the elastomer with integration so as to be opened outward from the through-hole, and the inclination angle of an inclined side wall of the joint is set to not less than 45 degrees and less than 90 degrees.
5. In a joining device for injecting and discharging a substance into and out of a minute flow channel device as defined in item 4, a rigid member with an opening and a joint matching member are provided so as to surround said opening of the rigid member, and a joint of the minute flow channel device is pressed against the joint matching member so that an edge of an inner wall of the joint matching member are contacted with a periphery of an inclined side surface of the joint.
   In the minute flow channel device and the joining device in items 2 and 3, the convex joint is formed at the minute flow channel device and the concave joint matching member is formed at the joining device for the joint between the minute flow channel device and the joining device. In the minute flow channel device and the joining device in items 4 and 5, in contrast, the concave joint is formed at the minute flow channel device and the convex joint matching member is formed at the joining device for the joint between the minute flow channel device and the joining device. In this case, the same function/effect can be exhibited as items 2 and 3.
6. In the minute flow channel device as defined in item 1, at least a main surface of the elastomer to be bonded with the substrate is made of adhesive material to the substrate.
   According to the minute flow channel device in item 6, since the substrate and the elastomer can be bonded without adhesive, the minute flow channel device can be easily fabricated. Moreover, the edge of the inner wall of the joint matching member can be tightly contacted with the inclined side wall of the joint.
7. In the minute flow channel device as defined in item 6, the elastomer includes mainly silicon rubber.
8. In the minute flow channel device as defined in item 7, the silicon rubber includes mainly polydimethylsiloxane.
   In this case, since the elastomer is made of the silicon rubber mainly containing the polydimethylsiloxane, the elastomer can be bonded with the substrate precisely and tightly.
9. In the minute flow channel device as defined in any one of items 1-8, the elastomer is bonded with the substrate detachably.
   In this case, the elastomer can be exchanged by another elastomer after the use of the minute flow channel device for a given period. Therefore, the contamination of the minute flow channel device by biological substance can be reduced. Moreover, since the elastomer can be washed with separation from the substrate, the minute flow channel device can be easily reused, so that some components of the minute flow channel device can not be wasted after the use for a given period of time. In addition, if various elastomers with respective various ditches are prepared, various minute flow channel device can be fabricated in low cost.
10. In a method for using a minute flow channel device as defined in item 1, a plurality of steps are carried out as follows:
   bonding a substrate with an elastomer to constitute a flow channel,
   injecting a substance to be chemically reacted in the flow channel to create a product through a given liquid processing, and
   directly processing the product which is held at the elastomer and/or the substrate under non-existence of the substrate or the elastomer after the release of the elastomer.

   In this case, a liquid processing can be performed sufficiently to create a reacted production, and a selective liquid processing can be performed for the reacted production. Therefore, the processing performance and the operationality can be developed.
11. In the using method as defined in item 10, the liquid processing is a chemical reaction so that the substance includes a reacting sample, and the product is measured as a reacted product after the release of the elastomer.
   In this case, the reacted product can be measured with a simple instrument, and the measurement sensitivity and precision can be enhanced.
12. In the using method as defined in item 10 or 11, a reacting species to be reacted with the product is immobilized in the flow channel.
   In this case, since the reacting species can be held in the flow channel after the release of the elastomer, the chemical reaction can be easily and precisely performed.
13. In the using method as defined in any one of items 10-12, the substance includes at least one kind of reacting species.
   In this case, since the substance includes the reacting species (e.g., liquid agent), in addition to the reacting sample (e.g., liquid sample), the chemical reaction can be performed at the same time when the substance is injected. If the substance includes two or over kinds of reacting species, various chemical reactions can be performed simultaneously.
14. In the using method as defined in item 10, the liquid processing is a separation so that the substance includes a species to be separated, and the product is collected as a separated product after the release of the elastomer.
   In this case, a given product can be separated from the substance injected into the flow channel, directly collected and reacted easily. In addition, the collecting efficiency and the reacting efficiency of the product can be enhanced.
15. In the using method as defined in any one of items 10-14, either of bonded surfaces of the substrate and the elastomer is formed flat, and the product is processed on the flat bonded surface of the substrate or the elastomer.

In this case, the three-dimensional processing in the flow channel and the two-dimensional processing in the flat surface can be performed simultaneously, so that the product creating operation and the product processing operation can be easily performed simultaneously under optical condition, which was not able to be performed conventionally. Therefore, the processing performance and the operationality can be enhanced in comparison with conventional ones.

### BRIEF DESCRIPTION OF THE DRAWINGS

For better understanding of the present invention, reference is made to the attached drawings, wherein
Fig. 1 is a perspective view illustrating a first embodiment relating to a minute flow channel device according to the present invention,
Fig. 2 is a cross sectional view illustrating the combination of the minute flow channel device illustrated in Fig. 1 and a joining device which is joined with the minute flow channel device,
Fig. 3 is a perspective view illustrating a second embodiment relating to a minute flow channel device according to the present invention,
Fig. 4 is a cross sectional view illustrating the combination of the minute flow channel device illustrated in Fig. 3 and a joining device which is joined with the minute flow channel device,
Fig. 5 is a perspective view illustrating the combination of a third embodiment relating to a minute flow channel device according to the present invention and a joining device which is joined with the minute flow channel device,
Fig. 6 is a cross sectional view illustrating the combination illustrated in Fig. 5,
Fig. 7 is a perspective view illustrating components of the combination illustrated in Fig. 5,
Fig. 8 is an exploded perspective view illustrating a fourth embodiment relating to a minute flow channel device according to the present invention,
Fig. 9 is a perspective view illustrating the combination of a fifth embodiment relating to a minute flow channel device according to the present invention and a joining device which is joined with the minute flow channel device,
Fig. 10 is a cross sectional view illustrating the combination illustrated in Fig. 9, and
Fig. 11 is a perspective view illustrating components of the combination illustrated in Fig. 9.

### BEST MODE FOR CARRYING OUT THE INVENTION

### [First embodiment]

Figs. 1 and 2 relate to a first embodiment according to the present invention. Fig. 1 is a perspective view illustrating a minute flow channel device relating to the first embodiment, and Fig. 2 is a cross sectional view illustrating the combination of the minute flow channel device illustrated in Fig. 1 and a joining device which is joined with the minute flow channel device.

The illustrated minute flow channel device includes a substrate 1-1 and an elastomer 1-2 which are bonded each other. A ditch to constitute a flow channel are formed at either or both of the bonded surfaces of the substrate 1-1 and the elastomer 1-2. In this embodiment, as illustrated in Fig. 2, a ditch 1-14 is formed at the bonded surface of the elastomer 1-2 to constitute a flow channel 1-3, and through-holes are formed so as to be communicated with the flow channel 1-3 to constitute inlet 1-6 and outlet 1-7 for a substance such as fluid or gas.

Moreover, convex joints 1-4 are formed around the inlet 1-6 and the outlet 1-7 with the integration with the elastomer 1-2. In this case, the inclination angle θ1 of the inclined side walls 1-12 of the joints 1-4 is set to not less than 45 degrees and less than 90 degrees against the main surface of the elastomer 1-2.

The joining device for injecting and discharging in and out of the minute flow channel device is made of a rigid member 1-5, as shown in Fig. 2, where openings 1-8 and 1-9 corresponding to the inlet 1-6 and outlet 1-7 are formed, and concave joint matching members 1-10 are formed at the joining regions between the minute flow channel device and the joining device so as to surround the openings 1-8 and 1-9. The size of the joint matching member 1-10 is set smaller than the size of the convex joint 1-4. The edges 1-11 of the inner walls of the joint matching members 1-10 is contacted with the peripheries of the inclined side walls 1-12 of the convex joints 1-4 to join the rigid member 1-5, that is, the joining device with the minute flow channel device.

In this way, in this embodiment, the minute flow channel device and the joining device are joined each other through the pressing contact of the concave joint matching members 1-10 with the openings 1-8 and 1-9 formed at the rigid member 1-5 as the joining'device against the convex joints 1-4 with the inlet 1-6 and the outlet 1-7 formed at the elastomer 1-2 of the minute flow channel device. In this case, the inclination angle θ1 of the inclined side walls 1-12 of the joints 1-4 is set to not less than 45 degrees and less than 90 degrees so that the joints 1-4 are spread downward. Since the inclined side walls 1-12 of the joints 1-4 are deformed elastically so as to contact with the edges 1-11 of the inner walls of the joint matching members 1-10, the substances to be injected and discharged can be sealed precisely at the connection between the minute flow channel device and the joining device.

Herein, if the inclination angle θ1 of the inclined side walls 1-12 of the joints 1-4 is set within another angle range except the above-mentioned preferable angle range, the inclined side walls 1-12 can not be contacted with the edges 1-11 of the inner walls of the joint matching members 1-10 sufficiently, so that the sealing performance of the substance to be injected and discharged may be deteriorated. Therefore, the inclination angle θ1 is preferably set within the above-mentioned preferable angle range.

In this embodiment, an additional joining member such as a fitting coupler except the joining device where the inlet 1-8 and the outlet 1-9 as flow channels communicated with the flow channel 1-3 of the minute flow channel device are formed is not required, and the attachment to another device of the additional joining member is not required. Moreover, minute pipes to be pressed into the inlet 1-8 and the outlet 1-9 are not required. In this embodiment, the rigid member 1-5 as the joining device can be joined easily with the minute flow channel device through pressing therebetween, so that the joining operation between the minute flow channel device and the joining device can be automatized with a given instrument. As a result, the joining operation and the joining structure can be simplified, so that the reliability of the joining operation can be developed and the joining cost can be lowered.

In this embodiment, as illustrated in Fig. 2, the joint matching members 1-10 are formed at both of the inlet 1-8 and the outlet 1-9 of the rigid member 5 as the joining device, but may be formed at another pipe-shaped rigid member.

In this embodiment, the ditch 1-4 is formed at the elastomer 1-2 to constitute the flow channel 1-3. However, another ditch may be formed at the substrate 1-1 to constitute another flow channel. In addition, ditches may be formed at the substrate 1-1 and the elastomer 1-2 so as to be matched each other to constitute a flow channel. In these cases, the same function and effect as this embodiment can be exhibited.

The elastomer 1-2 may be made of sticky material with the substrate 1-1. In this case, the substrate 1-1 and the elastomer 1-2 can be joined each other without any adhesive to form the flow channel. Therefore, the joining operation can be much simplified, and the inclined side walls 1-12 can be tightly contacted with the edges 1-11 of the inner walls of the joint matching members 1-10.

As the sticky material can be exemplified silicon rubber, particularly polydimethylsiloxane with excellent adhesive. The use of silicon rubber enables the minute flow channel device and the joining device to be easily and tightly joined. As the silicon rubber, silicon RVT rubber KE-1310ST for mold patterning (which is trade name and made by Shin-Etsu Chemical Co. Ltd.) may be preferably employed.

It is desired to bond the elastomer 1-2 with the substrate 1-1 detachably. In this case, the elastomer 1-2 can be exchanged by another elastomer after the use of the minute flow channel device for a given period. Therefore, the contamination of the minute flow channel device by substances to be injected and discharged can be reduced. Moreover, since the elastomer 1-2 can be washed with separation from the substrate 1-1, the minute flow channel device can be easily reused, so that some components of the minute flow channel device can not be wasted after the use for a given period of time. In addition, if various elastomers with respective various ditches are prepared, various minute flow channel device can be fabricated in low cost.

In this embodiment, in addition to the preferable minute flow channel device, the preferable joining device and joining method can be provided, whereby a substance such as fluid or gas can be introduced into the minute flow channel device from outside and which are usable as a joining device and a joining method for a DNA capillary array as the minute flow channel device.

### [Second embodiment]

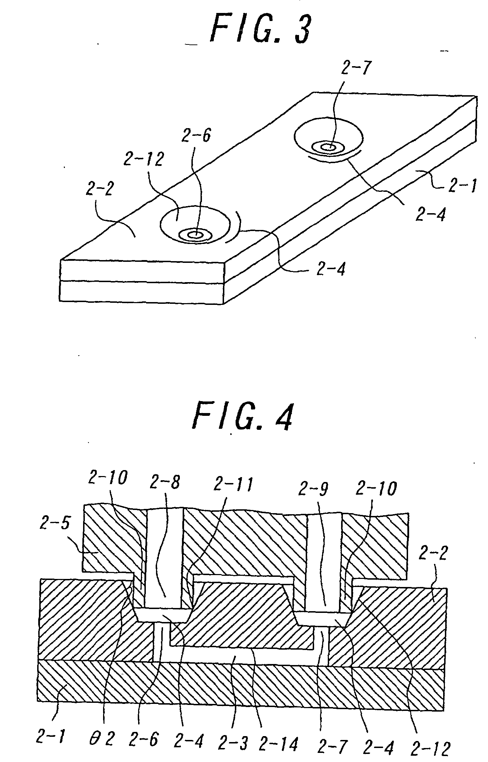

Figs. 3 and 4 relate to a second embodiment according to the present invention. Fig. 3 is a perspective view illustrating a minute flow channel device relating to the second embodiment, and Fig. 4 is a cross sectional view illustrating the combination of the minute flow channel device illustrated in Fig. 3 and a joining device which is joined with the minute flow channel device.

In this embodiment, the illustrated minute flow channel device includes a substrate 2-1 and an elastomer 2-2 which are bonded each other, as the first embodiment. A ditch 2-14 is formed at the bonded surface of the elastomer 2-2 to constitute a flow channel 2-3, and through-holes are formed so as to be communicated with the flow channel 2-3 to constitute inlet 2-6 and outlet 2-7 for a substance such as fluid or gas. Also, in this embodiment, concave joints 2-4 are formed around the inlet 2-6 and the outlet 2-7 with the integration with the elastomer 2-2, different from the first embodiment. In this case, the inclination angle θ2 of the inclined side walls 2-12 of the joints 2-4 is set to not less than 45 degrees and less than 90 degrees against the main surface of the elastomer 2-2.

The joining device is made of a rigid member 2-5, where openings 2-8 and 2-9 corresponding to the inlet 2-6 and outlet 2-7 are formed, and convex joint matching member 2-10 are formed at the joining regions between the minute flow channel device and the joining device so as to surround the openings 2-8 and 2-9. The size of the joint matching member 2-10 is set smaller than the size of the concave joint 2-4. The edges 2-11 of the inner walls of the joint matching members 2-10 is contacted with the peripheries of the inclined side walls 2-12 of the concave joints 2-4 to join the rigid member 2-5, that is, the joining device with the minute flow channel device.

In this way, in this embodiment, the minute flow channel device and the joining device are joined each other through the pressing contact of the convex joint matching member 2-10 against the concave joints 2-4, so that the same function/effect as the first embodiment can be exhibited. Moreover, the top surface of the elastomer 2-2 can be flattened, so that there can not be almost the conveying error of the minute flow channel device and the operationality of the minute flow channel device can be developed.

In this embodiment, too, the joint matching members 2-10 which are formed at both of the inlet 2-8 and the outlet 2-9 may be formed at another pipe-shaped rigid member.

### [Third embodiment]

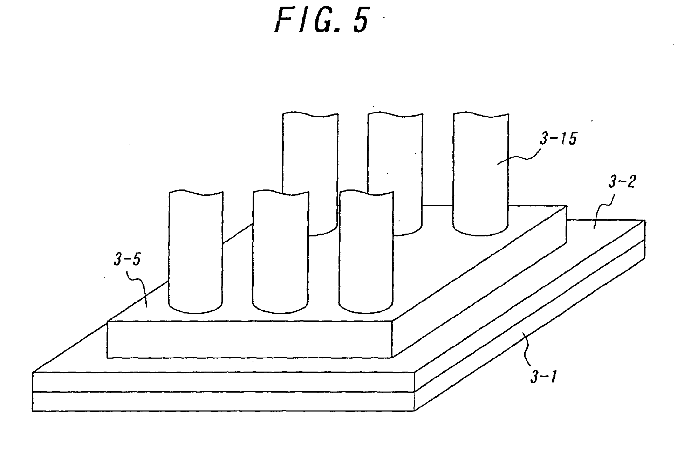

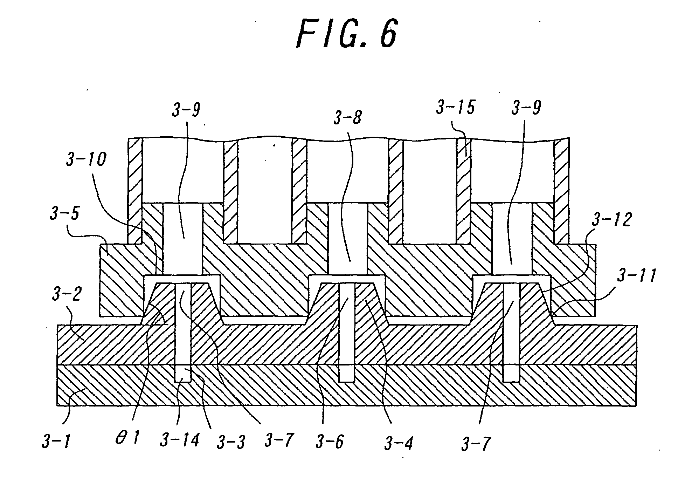

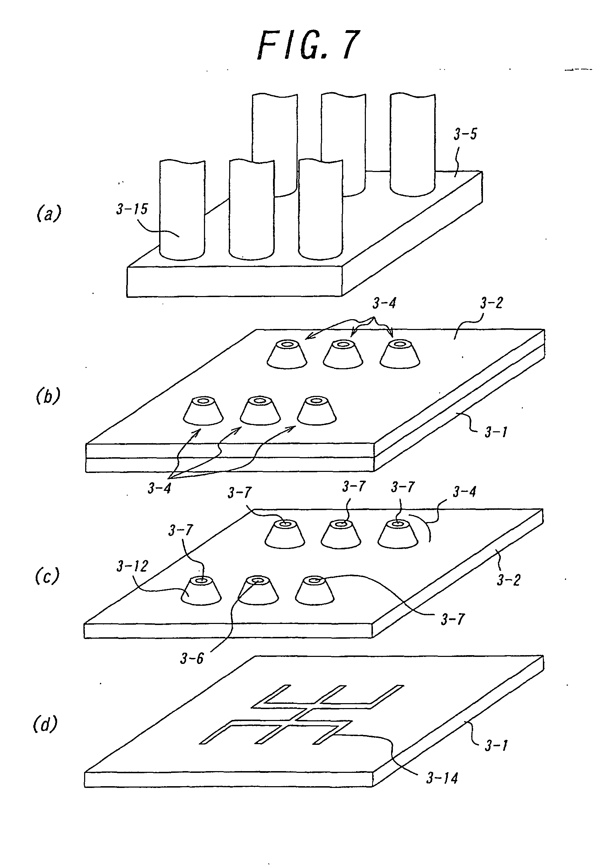

Figs. 5 through 7 relate to a third embodiment according to the present invention. Fig. 5 is a perspective view illustrating a minute flow channel device relating to the third embodiment, and Fig. 6 is a cross sectional view illustrating the combination of the minute flow channel device illustrated in Fig. 5 and a joining device which is joined with the minute flow channel device. Fig. 7 is a perspective view illustrating components of the combination illustrated in Fig. 5. Figs. 7(a) and (b) are perspective views illustrating the joining device and the minute flow channel device, respectively, and Figs. 7(c) and (d) are perspective views illustrating the elastomer and the substrate of the minute flow channel device, respectively. The minute flow channel device illustrated in Fig. 7(b) is constructed of the substrate 3-1 illustrated in Fig. 7(d) and the elastomer 3-2 illustrated in Fig. 7(c) which are bonded each other. The combination illustrated in Figs. 5 and 6 is constructed of the minute flow channel device illustrated in Fig. 7(b) and the joining device illustrated in Fig. 7(a) which are joined through pressing therebetween.

This embodiment is a modification from the first embodiment, so the essence of the present embodiment will be described.

The illustrated minute flow channel device includes a substrate 3-1 which is disposed in the lower side and an elastomer 3-2 which is disposed in the upper side. The elastomer 3-2 functions as a covering member for the substrate 3-1 as illustrated in Figs. 5, 6, 7(b) and 7(c), and thus, made of polydimethylsiloxane (PDMS) by means of integral molding using a die. At the elastomer 3-2 are formed a suspension inlet 3-6 to inject suspension and five outlets 3-7 to collect the suspension after processing so as to be through the elastomer 3-2. Moreover, convex joints 3-4 are formed around the inlet 3-6 and the outlets 3-7 with integration with the elastomer 3-2. In this embodiment, the rear surface of the elastomer 3-2 opposite to the main surface where convex joints 3-4 are formed is smoothed.

The substrate 3-1 may be made of silicon. Ditches 3-14 are formed at the bonded surface of the substrate 3-1 to constitute flow channels 3-3, as illustrated in Fig. 6 and Fig. 7(d). The substrate 3-1 and the elastomer 3-2 are bonded each other by bonding the main surface with the ditches 3-14 and the rear surface of the elastomer 3-2 with adhesive PDMS to constitute the minute flow channel device. That is, the components illustrated in Figs. 7 (c) and (d) are bonded vertically to constitute the minute flow channel device illustrated in Fig. 7(b).

The joining device is made of a rigid member such as aluminum member, as illustrated in Fig. 5, 6 and 7(a), where openings 3-8 and 3-9 corresponding to the inlet 3-6 and outlets 3-7 are formed, and concave joint matching member 3-10 are formed at the rear surface of the rigid member 3-5. Then, tubes 3-15 for injecting and discharging are joined with the joint matching members 3-10 so as to be communicated with the openings 3-8 and 3-9. In Figs. 5, 6 and 7(a), the non-joined sides (forefronts) of the tubes 3-15 are cut off.

As illustrated in Figs. 5 and 6, the joining member can be pressed against and joined with the minute flow channel device so that the joint matching members 3-10 are matched to the joints 3-4 and the edges 3-11 of the inner walls of the joint matching members 3-10 are pressed against the peripheries of the inclined side walls 3-12 of the joints 3-4. That is, in Fig. 7, the components illustrated in Figs. 7(a) and (b) are joined vertically to constitute the combination illustrated in Figs. 5 and 6.

According to the present embodiment, the same function/effect as the first and the second embodiments can be exhibited. In this embodiment, the (six) joint matching members 3-10 formed at the rigid member 3-5 are joined with the (six) joints 3-4 on the block, so that the joining operation can be automatized easily. Moreover, since the elastomer 3-2 is made of PDMS with excellent adhesive and elasticity, the connections between the edges 3-11 of the joint matching members 3-10 and the joints 3-4 can be sealed precisely by utilizing the adhesive and the elasticity of the PDMS.

This embodiment may be modified and varied. For example, the number of the joint 3-4 is not limited to six as illustrated in this embodiment, but to any number requiring in the combination. Also, the joint matching members 3-10 corresponding to the respective joints 3-4 may be formed at a plurality of rigid members.

Moreover, the substrate 3-1 may be made of glass or fused silica, in addition to silicon, and the elastomer 3-2 may be made of any other elastic material such as latex, in addition to the PDMS.

In addition, the flow channel may be formed by various patterns, and the ditches may be formed at the elastomer 3-2 and both of the substrate 3-1 and the elastomer 3-2, in addition to the substrate 3-1.

Moreover, if a regent, which is chemically reacted, e.g., through biological reaction such as enzymic reaction, antigen antibody reaction and nucleic hybridization reaction or luminescence reaction, with a substance, e.g., constituent of blood and nucleic acid, is employed, the combination can function as a reactor. The regent may be disposed at either of elastomer and substrate. In this case, after reaction, either of the elastomer and substrate is exchanged. Therefore, the minute flow channel device can be reused through the exchange and the component of the minute flow channel device is not wasted. The present modification can be applied for the first and the second embodiments.

### [Fourth embodiment]

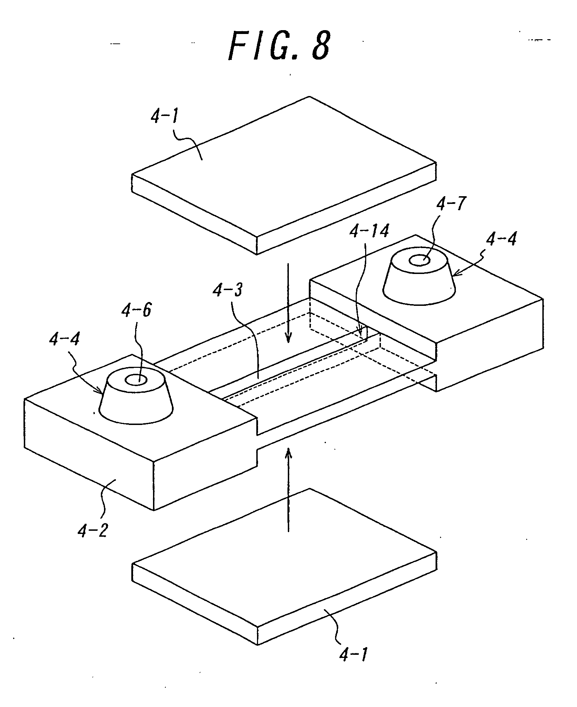

Fig. 8 is an exploded perspective view illustrating substantial parts of a fourth embodiment relating to a minute flow channel device according to the present invention. In this embodiment, a ditch 4-14 of an elastomer 4-2 is partially bored, and then, the elastomer 4-2 is sandwiched by two substrates 4-1 to constitute a flow channel 4-3. The substrates 4-1 are preferably made of optically transparent material. In this case, external observation or optically measurement can be carried out easily. In Fig. 8, reference numeral 4-4 designates joints, and reference numeral 4-6 and 4-7 designate an inlet and an outlet, respectively.

### [Fifth embodiment]

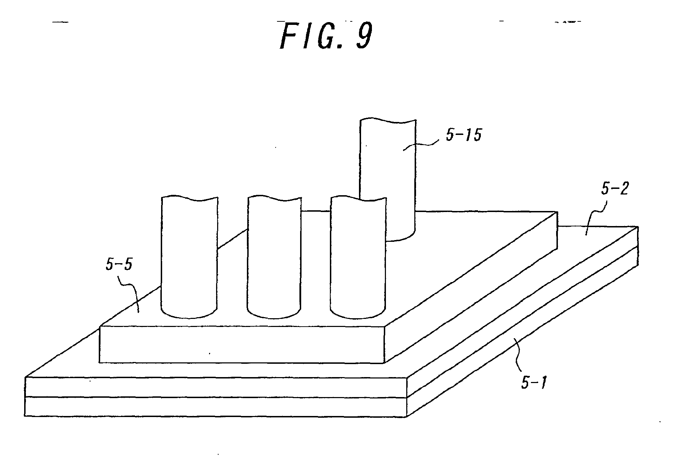

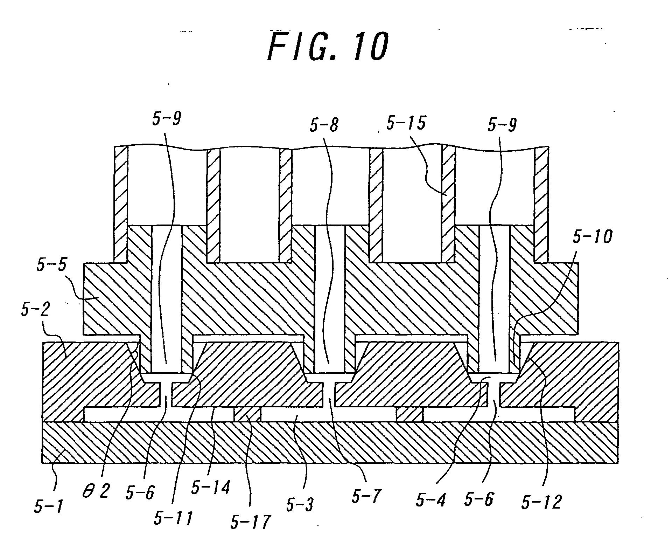

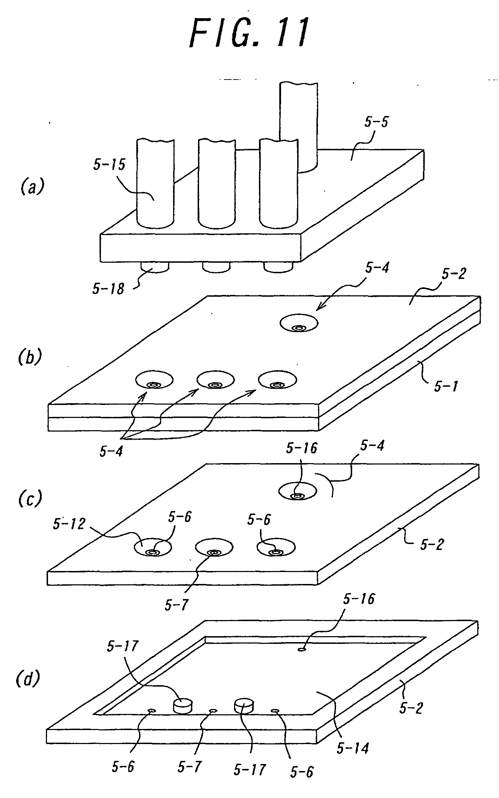

Figs. 9 through 11 relate to a fifth embodiment according to the present invention. Fig. 9 is a perspective view illustrating the combination of a minute flow channel device relating to the fifth embodiment and a joining device which is joined with the minute flow channel device, and Fig. 10 is a cross sectional view illustrating the combination illustrated in Fig. 9. Then, Fig. 11 is a perspective view illustrating components of the combination illustrated in Fig. 9. Figs. 11(a) and (b) are perspective views illustrating the joining device and the minute flow channel device, respectively, and Figs. 11(c) and (d) are perspective views illustrating the elastomer as viewed from the top side and the bottom side, respectively. The minute flow channel device illustrated in Fig. 11(b) is constructed of the substrate 5-1 and the elastomer 5-2 illustrated in Figs. 11(c) and (d) which are bonded each other. The combination illustrated in Figs. 9 and 10 is constructed of the minute flow channel device illustrated in Fig. 11(b) and the joining device illustrated in Fig. 11(a) which are joined through pressing therebetween.

This embodiment is a modification from the second embodiment, so the essence of the present embodiment will be described because the fundamental structure of the present embodiment is similar to the one of the second embodiment.

The illustrated minute flow channel device includes a substrate 5-1 which is disposed in the lower side and an elastomer 5-2 which is disposed in the upper side. The elastomer 5-2 functions as a covering member for the substrate 5-1 as illustrated in Figs. 9, 10, 11(b) through 11(d), and thus, made of polydimethylsiloxane (PDMS) by means of integral molding using a die. At the elastomer 5-2 are formed a suspension inlet 5-16 to inject suspension and three outlets 5-6 and 5-7 to collect the suspension after processing so as to be through the elastomer 5-2. Moreover, concave joints 5-4 are formed around the inlet 5-16 and the outlets 5-6; 5-7 with integration with the elastomer 5-2 at the main surface to be joined. Then, at the rear surface of the elastomer 5-2 is formed a ditch 5-14 to constitute a flow channel 5-3 as illustrated in Fig. 11(d). Then, at the ditch 5-14 are formed pillars 5-17.

The substrate 5-1 may be made of flat glass, as illustrated in Fig. 10. The substrate 5-1 and the elastomer 5-2 are bonded each other with adhesive PDMS to constitute the minute flow channel device.

The joining device is made of a rigid member such as aluminum member, as illustrated in Fig. 9, 10 and 11(a), where openings 5-8 and 5-9 communicated with the inlet 5-16 and the outlets 5-6; 5-7 are formed, and tubes 5-18 to constitute joint matching members 5-10 are formed at the rear surface of the rigid member 5-5, and tubes 5-15 for injecting and discharging are formed at the main surface of the rigid member 5-5. In Figs. 9, 10 and 11(a), the non-joined sides (forefronts) of the tubes 5-15 are cut off.

As illustrated in Figs. 9 and 10, the joining member can be pressed against and joined with the minute flow channel device so that the joint matching members 5-10 are matched to the joints 5-4 and the edges 5-11 of the inner walls of the joint matching members 5-10 are pressed against the peripheries of the inclined side walls 5-12 of the joints 5-4. That is, in Fig. 11, the components illustrated in Figs. 11(a) and (b) are joined vertically to constitute the combination illustrated in Figs. 9 and 10. Herein, Fig. 10 is a lateral cross section of the combination between the minute flow channel device and the joining device, where three outlets 5-6 and 5-7 are arranged laterally.

In this embodiment, the minute flow channel device can be utilized as a DNA chip where many DNA probes are immobilized. In this case, the DNA probes are immobilized at the flow channel of the substrate. Since the substrate is flat, the solidification of the DNA probes can be performed by means of normal solidification such as spotting method, point solidification method using ink jet method or optical solidification method using optical reaction.

After the formation of the DNA probes at the substrate, the elastomer is bonded with the substrate to constitute the minute flow channel device by utilizing the adhesion of the elastomer. If the elastomer is made of silicone resin, the connection between the substrate and the elastomer can be sealed sufficiently not to leak fluid, and the elastomer can be easily deformed by the pressing at the joint between the substrate and the elastomer. Therefore, the silicone resin elastomer can be preferably employed.

As a result, if a plurality of flow channels are formed at the minute flow channels to flow different kinds of fluids therein, the fluids can not be mixed and the flow channels can not be broken during the flow operation, so that the minute flow channel device can be employed for liquid processing such as chemical reaction, extraction or flow channel washing. Since the substrate can be detached from the elastomer after the liquid processing, the substrate with the immobilized DNA probes therein can be measured by a measuring device commercially available.

Concretely, a liquid sample containing nucleic acid to be measured is injected into the flow channel 1-3 or 2-3 as illustrated in Figs. 1-4 to create a product through the nucleic acid hybridization reaction in the flow channel. In this case, a liquid reagent containing a nucleic probe to be reacted with the targeting nucleic acid in the liquid sample is injected simultaneously or successively. In this case, the injecting pressure and the discharging pressure are controlled appropriately so that the liquid sample is pumped in the flow channel, the chemical reaction between the targeting nucleic acid and the nucleic probe. In this way, the nucleic acid hybridization reaction can be performed three-dimensionally in the flow channel.

After the reaction for a given period of time, the elastomer 1-2 or 2-2 is detached from the substrate 1-1 or 2-1 to investigate the liquid sample remaining at the substrate or the elastomer. The investigation may be performed with, e.g., a fluorescence measuring device. In this case, the intensity of fluorescence from the liquid sample is measured. In the fluorescence measurement, since the fluorescence from the liquid sample can be directly measured, different from the fluorescence measurement of a liquid sample in a flow channel, the measurement sensitivity can be enhanced. Particularly, in the use of the minute flow channel device as illustrated in Figs. 1-4, since the substrate is flat, different kinds pf nucleic probes can be immobilized in high density in the flow channel of the substrate. Therefore, if the nucleic acid hybridization reaction is performed three-dimensionally and the measurement is performed two-dimensionally, the increase in reacting amount and various measurements can be performed effectively and efficiently.

The chemical reaction and measurement using the liquid reagent can be applied for all of the embodiments as mentioned above. In this case, it is desired that a ditch or a minute hole for holding the liquid reagent to be used in measurement is formed at the minute flow channel device. The chemical reaction and measurement using the immobilized reagent can be applied for all of the embodiments as mentioned above. In this case, it is desired that the immobilized reagent is set onto the plane surface of the substrate or the elastomer as the minute flow channel device is separated into the substrate and the elastomer. The setting of the immobilized reagent can be performed by means of point solidification method or optical solidification method. Moreover, the immobilized reagent is preferably set plurally in the flow channel of the minute flow channel device. The solidifying length can be controlled by increasing or decreasing the spotting number or the optical illumination number.

If the nucleic probe as the DNA reagent is immobilized onto the plane substrate without the formation of a flow channel into the elastomer, the chemical reaction using the nucleic probe is performed two-dimensionally. In this case, the amount of the nucleic probe to be used in the chemical reaction is small in comparison with a three dimensional chemical reaction, and the agitation in the chemical reaction is not sufficient. As a result, the measurement sensitivity for the resultant liquid sample is deteriorated. In real, in a nucleic acid hybridization reaction on a slide glass (with a width of about 25mm and a length of about 76mm), since an elastomer (with a width of about 25mm and a length of 76mm) with a ditch therein made of PDMS is joined with the slide glass, the measurement intensity is large. In contrast, in a nucleic acid hybridization reaction on a cover glass, since another cover glass is mounted on the cover glass with a liquid sample thereon under a given reaction temperature, the measurement sensitivity is small. In the former reaction, six lines of flow channels are formed at the center region of the slide glass (within a width of about 20mm and a length of about 20mm). The solidifying and the ditch formation of the elastomer is performed commensurate with the flow channels of the slide glass. In this way, even though a plurality of flow channels (e.g., six flow channels) are formed at the minute flow channel device, the liquid processing can be performed at every flow channel without the mixing of the adjacent flow channels.

In addition to the chemical reaction, the separation and collection of a given fluid (liquid or gas) can be applied for all of the embodiments as mentioned above. In this case, a substrate and an elastomer are joined each other to constitute a minute flow channel device and to perform a three-dimensional separation using the minute flow channel device. The three-dimensional separation means affinity chromatography, electrophoretic migration and the like. Then, the elastomer is released to easily collect the resultant product from the substrate and/or the elastomer after separation. The separation and collection may be carried out in a given chemical reaction.

After the release of the elastomer, a given reagent is added to the fluid by means of point solidification or the like to perform a selective reaction between the fluid and the reagent, before or in place of collection. Then, after the release of the elastomer, the substrate and/or the elastomer may be washed. In this case, waste contamination can be reduced, and the substrate and/or the elastomer can be reused repeatedly.

In this way, in the use of the embodiments as mentioned above according to the present invention, a composite liquid processing, which is a combination of the three-dimensional liquid processing using the combination of the substrate and the elastomer and the two-dimensional liquid processing for the product created by the three-dimensional liquid processing after the release of the elastomer, can be performed. In this case, all of the embodiments as mentioned above can be utilized at the most.

Next, the function and effect relating to the fifth embodiment according to the present invention will be described. The use of joints can exhibit the same function/effect as the embodiments as mentioned previously. That is, since the (four) joint matching members 5-10 are formed at the same rigid member 5-5, the joint matching members 5-10 can be joined with the joints 5-4 in the block. Therefore, the joining operation can be simplified to be easily automatized. Particularly, if the elastomer 5-2 is made of PDMS with high adhesion and elasticity, the minute flow channel device can be easily fabricated and the connection between the joints 5-4 and the joint matching members 5-1 can be sealed precisely by the adhesion and elasticity of the PDMS.

The fifth embodiment may be modified and varied. For example, the number of the joint 5-4 is not limited to four as illustrated in this embodiment, but to any number requiring in the combination. Also, the total number of the inlet 5-8 and the outlets 5-6; 5-7 is not limited to four as illustrated in this embodiment, but to any number requiring in the combination. Moreover, the joint matching members 5-10 corresponding to the respective joints 5-4 may be formed at a plurality of rigid members. In addition, the substrate 5-1 may be made of silicon or fused silica, in addition to glass, and the elastomer 5-2 may be made of any other elastic material such as latex, in addition to the PDMS.

The connection between the minute flow channel device and the joining device does not depend on the configuration of the flow channel of the minute flow channel device. Therefore, the configuration of the ditches 5-14 illustrated in Fig. 11(d) is exemplified and not limited. The ditches 5-14 may be formed at the substrate 5-1 or both of the substrate 5-1 and the elastomer 5-2.

Although the present invention was described in detail with reference to the above examples, this invention is not limited to the above disclosure and every kind of variation and modification may be made without departing from the scope of the present invention. For example, the convex or concave joint may be formed at the side of the elastomer, instead of the main surface thereof.

### (Industrial applicability)

According to the present invention, the connection to inject and discharge a substance such as fluid or gas can be easily realized and automatized. Moreover, the reliability of the connection can be developed. In this point of view, a minute flow channel device and a joining device which are to be joined under the connection as mentioned above can be provided in low cost and high productivity. In addition, the minute flow channel device and/or the joining device can be easily exchanged.

In the use of the minute flow channel device and the joining device, a liquid processing can be performed sufficiently to create a reacted production, and a selective liquid processing can be performed for the reacted production. Therefore, the processing performance and the operationality can be developed.

## Claims

1. A minute flow channel device comprising a substrate and an elastomer bonded with said substrate, wherein a ditch is formed at either or both of bonded surfaces of said substrate and said elastomer to constitute a flow channel, and a through-hole, which functions as an inlet and/or an outlet of a substance and is communicated with said flow channel, is formed at said elastomer.

2. The minute flow channel device as defined in claim 1, wherein a convex joint is formed at said elastomer with integration so as to be opened outward from said through-hole, and the inclination angle of an inclined side wall of said joint is set to not less than 45 degrees and less than 90 degrees.

3. A joining device for injecting and discharging a substance into and out of a minute flow channel device as defined in claim 2, comprising a rigid member with an opening and a joint matching member provided so as to surround said opening of said rigid member, wherein a joint of said minute flow channel device is pressed against said joint matching member so that an edge of an inner wall of said joint matching member are contacted with a periphery of an inclined side surface of said joint.

4. The minute flow channel device as defined in claim 1, wherein a concave joint is formed at said elastomer with integration so as to be opened outward from said through-hole, and the inclination angle of an inclined side wall of said joint is set to not less than 45 degrees and less than 90 degrees.

5. A joining device for injecting and discharging a substance into and out of a minute flow channel device as defined in claim 4, comprising a rigid member with an opening and a joint matching member provided so as to surround said opening of said rigid member, wherein a joint of said minute flow channel device is pressed against said joint matching member so that an edge of an inner wall of said joint matching member are contacted with a periphery of an inclined side surface of said joint.

6. The minute flow channel device as defined in claim 1, wherein at least a main surface of said elastomer to be bonded with said substrate is made of adhesive material to said substrate.

7. The minute flow channel device as defined in claim 6, wherein said elastomer includes mainly silicon rubber.

8. The minute flow channel device as defined in claim 7, wherein said silicon rubber includes mainly polydimethylsiloxane.

9. The minute flow channel device as defined in any one of claims 1-8, wherein said elastomer is bonded with said substrate detachably.

10. A method for using a minute flow channel device as defined in claim 1, comprising the steps of:
bonding a substrate with an elastomer to constitute a flow channel,
injecting a substance to be chemically reacted in said flow channel to create a product through a given liquid processing, and
directly processing said product which is held at said elastomer and/or said substrate under non-existence of said substrate or said elastomer after the release of said elastomer.

11. The using method as defined in claim 10, wherein said liquid processing is a chemical reaction so that said substance includes a reacting sample, and said product is measured as a reacted product after the release of said elastomer.

12. The using method as defined in claim 10 or 11, wherein a reacting species to be reacted with said product is immobilized in said flow channel.

13. The using method as defined in any one of claims 10-12, wherein said substance includes at least one kind of reacting species.

14. The using method as defined in claim 10, wherein said liquid processing is a separation so that said substance includes a species to be separated, and said product is collected as a separated product after the release of said elastomer.

15. The using method as defined in any one of claims 10-14, wherein either of bonded surfaces of said substrate and said elastomer is formed flat, and said product is processed on said flat bonded surface of said substrate or said elastomer.
